# EUROPÄISCHE PATENTSCHRIFT

(11) **EP 2 679 443 B1**
(45) Veröffentlichungstag und Bekanntmachung des Hinweises auf die Patenterteilung: **20.02.2019**
(21) Anmeldenummer: 13002633.9
(22) Anmeldetag: 18.05.2013
(51) Int. Cl.: B60P 7/08

(54) **Klemmvorrichtung zum Feststellen zumindest eines Gurtes**
Clamping device for fixing at least one belt
Dispositif de serrage pour fixer au moins une ceinture

(30) Priorität: 28.06.2012 AT 7172012
(43) Veröffentlichungstag der Anmeldung: 01.01.2014
(73) Patentinhaber: ABA Hörtnagl GmbH, 6166 Fulpmes (AT)
(72) Erfinder: Hörtnagl, Andreas, 6166 Fulpmes (AT)
(74) Vertreter: Fechner, Thomas

(56) Entgegenhaltungen:
- WO-A1-00/35711
- US-A- 4 809 953

## Beschreibung

Die vorliegende Erfindung betrifft eine Klemmvorrichtung zum Festklemmen zumindest eines Gurtes, wobei die Klemmvorrichtung einen Grundkörper aufweist, an dem zumindest zwei als Steg zum Herumwickeln des Gurtes ausgebildete Grundkörperklemmkörper angeordnet sind.

Klemmvorrichtungen werden zum Beispiel dazu benutzt, eine Ladung mittels eines gespannten Gurtes zu befestigen oder Gurte in anderer Art und Weise miteinander zu verbinden. Eine solche Klemmvorrichtung ist z.B. aus der DE 25 52 993 bekannt. Die zum Festklemmen des Gurtes im gespannten Zustand benötigen Kräfte ergeben sich im Wesentlichen aus der Reibung zwischen den als Steg ausgebildeten Grundkörperklemmkörpern und dem herumgewickelten Gurt.

Um die Reibung und damit die Haltekräfte am Gurt erhöhen zu können, ist es bekannt, die Grundkörperklemmkörper mit einer aufgerauten z.B. gezackten oder gewellten Oberfläche zu versehen. Die Vorsprünge dieser Oberflächen sind dazu vorgesehen, in den Gurt eingedrückt zu werden, um so die Reibungskräfte zu erhöhen. Ein Nachteil dieser Ausgestaltungsformen ist es allerdings, dass hierdurch der Verschleiß am Gurt erhöht wird.

Eine Klemmvorrichtung der eingangs genannten Art ist aus der US 4,809,953 A bekannt.

Aufgabe der Erfindung ist es, eine alternative Art und Weise vorzuschlagen, wie gattungsgemäße Klemmvorrichtungen höhere Haltekräfte zur Verfügung stellen können.

Erfindungsgemäß wird dies erreicht, indem am Grundkörper zumindest ein dritter, als relativ zum Grundkörper schwenkbarer Hebel ausgebildeter Grundkörperklemmkörper angeordnet ist, wobei der dritte Grundkörperklemmkörper in eine Klemmstellung zum Einklemmen des Gurtes zwischen den als Steg ausgebildeten Grundkörperklemmkörpern und dem dritten Grundkörperklemmkörper schwenkbar ist.

Es ist also eine Grundidee der vorliegenden Erfindung, die an sich bekannten, als Steg ausgebildeten Grundkörperklemmkörper mit einem zusätzlichen schwenkbaren Grundkörperklemmkörper zu kombinieren, sodass der dritte Grundkörperklemmkörper in der Klemmstellung den Gurt zusammen mit den als Steg ausgebildeten Grundkörperklemmkörpern festklemmt. Hierdurch werden hohe Haltekräfte am gespannten Gurt erzeugt, ohne dass hierzu aufgeraute Oberflächen oder dergleichen notwendig sind.

Die als Steg zum Herumwickeln des Gurtes ausgebildeten Grundkörperklemmkörper können jeweils einen kreisrunden Querschnitt aufweisen. Es können aber auch andere Querschnitte realisiert werden.

Zur Erhöhung der Reibkräfte ist es grundsätzlich günstig, möglichst große Reibflächen zur Verfügung zu stellen. In diesem Sinne sehen bevorzugte Ausgestaltungsformen der Erfindung vor, dass zumindest einer der, vorzugsweise alle, Grundkörperklemmkörper eine zumindest bereichsweise, vorzugsweise vollständig, gekrümmte Gurtanlagefläche zur Anlage des Gurtes am jeweiligen Grundkörperklemmkörper aufweist.

Günstig ist es weiters, wenn der dritte Grundkörperklemmkörper als eine Art einseitig um eine Achse schwenkbarer Hebel ausgebildet ist. In diesem Sinne kann vorgesehen sein, dass der dritte Grundkörperklemmkörper um einen, vorzugsweise in seiner Position am Grundkörper fix angeordneten, Achsstift schwenkbar ist. Besonders bevorzugte Ausgestaltungsformen sehen dabei vor, dass der Achsstift und die beiden als Steg zum Herumwickeln des Gurtes ausgebildeten Grundkörperklemmkörper parallel zueinander angeordnet sind.

Um den Gurt möglichst effektiv und mit großen Reibflächen gegen die als Steg zum Herumwickeln des Gurtes ausgebildeten Grundkörperklemmkörper drücken zu können, sehen bevorzugte Varianten der Erfindung vor, dass zumindest einer der, vorzugsweise alle, Grundkörperklemmkörper eine zumindest bereichsweise, vorzugsweise vollständig, gekrümmte Gurtanlagefläche zur Anlage des Gurtes am jeweiligen Grundkörperklemmkörper aufweist.

Bei den als Steg ausgebildeten Grundkörperklemmkörpern kann es sich um sogenannte Fixstege handeln. In diesem Sinne kann vorgesehen sein, dass zumindest einer der, vorzugsweise alle, als Steg ausgebildeten Grundkörperklemmkörper in seiner bzw. ihrer Position am Grundkörper fixiert sind. Um das Auffädeln des Gurtes auf die Grundkörperklemmkörper zu vereinfachen, kann aber auch vorgesehen sein, dass zumindest einer der als Steg ausgebildeten Grundkörperklemmkörper in seiner Position relativ zum Grundkörper verstellbar, vorzugsweise verschwenkbar, am Grundkörper gelagert ist. Bevorzugte Ausgestaltungsformen der Erfindung sehen dabei vor, dass der als Steg ausgebildete und in seiner Position relativ zum Grundkörper verstellbar, vorzugsweise verschwenkbar, am Grundkörper gelagerte Grundkörperklemmkörper in der Klemmstellung zwischen dem anderen, als Steg ausgebildeten Grundkörperklemmkörper und einem bzw. dem Achsstift, um den der dritte Grundkörperklemmkörper schwenkbar ist, angeordnet ist. Günstig ist es dabei, wenn dieser als Steg ausgebildete, verstellbare Grundkörperklemmkörper in zumindest einer Position arretierbar ist. Vorzugsweise handelt es sich dabei um die Position, in der er zum Festklemmen des Gurtes angeordnet ist. Alternativ oder zusätzlich kann dieser verstellbare Grundkörperklemmkörper z.B. aber auch in seiner Position, in der er zum Einfädeln des Gurtes angeordnet ist, arretierbar sein.

Der schwenkbare Grundkörperklemmkörper kann in einem Querschnitt gesehen C-förmig und/oder halbmondförmig ausgebildet sein.

Grundsätzlich wird darauf hingewiesen, dass mit erfindungsgemäßen Klemmvorrichtungen nicht nur Gurte sondern auch Seile festgeklemmt werden können. Während es sich bei Gurten um lange flexible Gegenstände handelt, welche eine wesentlich größere Breite als Dicke aufweisen, sind Seile meist mit einem kreisrunden Querschnitt ausgestattet. Ihre Höhe und ihre Breite liegen also zumindest in der gleichen Größenordnung.

Ein erfindungsgemäßes Verfahren zum Festklemmen zumindest eines Gurtes und/oder zumindest eines Seiles mittels einer erfindungsgemäßen Klemmvorrichtung sieht vor, dass der Gurt oder das Seil um die als Stege ausgebildeten Grundkörperklemmkörper herumgewickelt und in der Klemmstellung mittels des dritten Grundkörperklemmkörpers gegen die als Stege ausgebildeten Grundkörperklemmkörper gedrückt wird. Besonders günstig im Sinne von hohen Reib- und damit auch Haltekräften ist es, wenn dabei der Gurt zwischen mindestens einem der als Steg ausgebildeten Grundkörperklemmkörper und dem dritten Grundkörperklemmkörper doppelt und an sich selbst anliegend verläuft. Hierdurch wird eine besonders effektive Gurt- an Gurt- Reib- bzw. Haltekraft erzeugt.

Weitere Merkmale und Einzelheiten bevorzugter Ausgestaltungsformen der Erfindung ergeben sich aus der nachfolgenden Figurenbeschreibung.

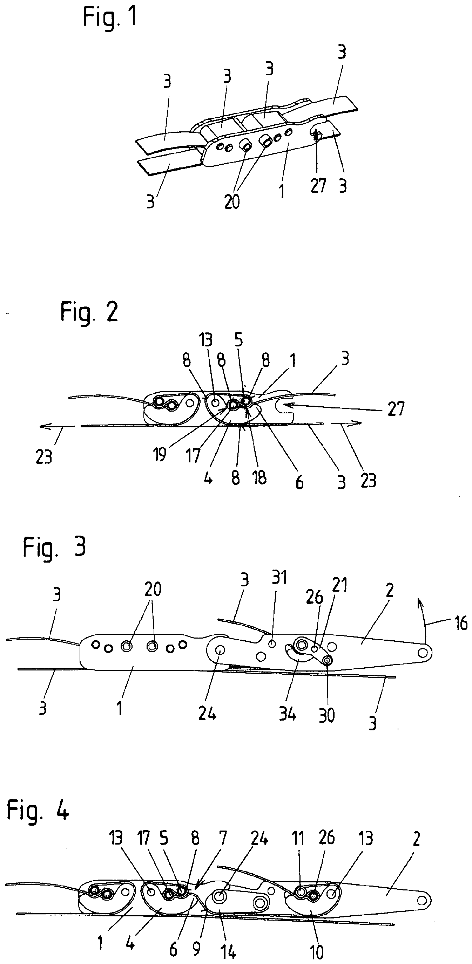

Die Fig. 1 bis 12 zeigen eine Ausgestaltungsform einer Spannvorrichtung mit erfindungsgemäßer Klemmvorrichtung.

In den Fig. 1 und 2 ist die erfindungsgemäße Klemmvorrichtung in einer perspektivischen Darstellung und in einem Längsschnitt gezeigt. Bei allen hier als Längsschnitt bezeichneten Darstellungen handelt es sich um Seitenansichten, bei denen jeweils eine Seitenwange des Grundkörpers 1 bzw. des Spannhebels 2 abgenommen bzw. nicht dargestellt ist, sodass die dahinterliegenden Bauteile sichtbar werden. In diesen Abbildungen ist der Spannhebel 2 von der Klemmvorrichtung bzw. ihrem Grundkörper 1 abgenommen. Bei der hiergezeigten Variante können gleichzeitig zwei Gurte 3 am Grundkörper 1 bzw. an der Klemmvorrichtung festgeklemmt werden. Das Festklemmen verhindert jeweils ein Abziehen der Gurte 3 in der jeweiligen Richtung 23 von der Klemmvorrichtung bzw. dem Grundkörper 1. Dies ist natürlich nur ein Beispiel. Bei der Erfindung kann es sich um Klemmvorrichtungen für nur einen Gurt 3 oder auch für mehr als zwei Gurte 3 handeln. Die erfindungsgemäßen Klemmvorrichtungen können, wie in diesem Ausführungsbeispiel realisiert, als Teil einer Spannvorrichtung mit zumindest einem Spannhebel 2 für den Spannvorgang ausgebildet sein. Wird der Gurt nur von Hand, also ohne Spannhebel 2 gespannt, so kann auf das Schwenkachslager 27 zum Ansetzen des Spannhebels 2 verzichtet werden.

Wie besonders gut in der Schnittdarstellung gemäß Fig. 2 zu sehen, ist bei dieser Klemmvorrichtung zum Festklemmen eines Gurtes 3 vorgesehen, dass am Grundkörper 1 der Klemmvorrichtung zumindest zwei als Steg zum Herumwickeln des Gurtes 3 ausgebildete Grundkörperklemmkörper 5 und 17 angeordnet sind, wobei am Grundkörper 1 zusätzlich zumindest ein dritter, als relativ zum Grundkörper 1 schwenkbarer Hebel ausgebildeter Grundkörperklemmkörper 4 angeordnet ist, wobei der dritte Grundkörperklemmkörper 4 in eine Klemmstellung zum Einklemmen des Gurtes 3 zwischen den als Steg ausgebildeten Grundkörperklemmkörpern 5 und 17 und dem dritten Grundkörperklemmkörper 4 schwenkbar ist. Hierdurch wird erreicht, dass in der, in Fig. 2 dargestellten Klemmstellung der schwenkbare Grundkörperklemmkörper 4 den Gurt 3 gegen die beiden als Steg ausgebildeten Grundkörperklemmkörper 5 und 17 drückt. Durch die Verwendung von zwei als Steg ausgebildeten Grundkörperklemmkörpern 5 und 17 ist es möglich, wie in Fig. 2 zu sehen, dass der Gurt 3 zwischen mindestens einem der als Steg ausgebildeten Grundkörperklemmkörper 5 und 17, hier dem Grundkörperklemmkörper 5 und dem dritten, also dem schwenkbaren Grundkörperklemmkörper 4 doppelt und dadurch an sich selbst anliegend verläuft. Durch dieses Gurt-auf-Gurt-Aufliegen werden in Kombination mit dem Andrücken des Gurtes 3 mittels des schwenkbaren Grundkörperklemmkörpers 4 besonders hohe Klemmkräfte erreicht. Die beiden als Steg zum Herumwickeln des Gurtes 3 ausgebildeten Grundkörperklemmkörper 5 und 17 weisen in diesem Ausführungsbeispiel einen kreisrunden Querschnitt auf, was aber nicht zwingend vorgesehen sein muss. Durch die in der Fig. 2 besonders gut sichtbare Möglichkeit des Herumführens des Gurtes 2 um diese beiden stegartigen Grundkörperklemmkörper 5 und 17 und das zusätzliche Andrücken mittels des dritten Grundkörperklemmkörpers 4 werden besonders hohe Halte- und Klemmkräfte erreicht.

Bevorzugte Ausgestaltungsformen, wie die hier gezeigte, sehen darüber hinaus vor, dass der dritte also der verschwenkbare Grundkörperklemmkörper 4 Ausnehmungen 18 und 19 zur zumindest teilweisen Aufnahme des Gurtes 3 und jeweils eines der als Steg ausgebildeten Grundkörperklemmkörper 5 und 17 aufweist. Hierdurch werden die Klemmkräfte nochmals erhöht, genauso wie durch die zumindest bereichsweise, vorzugsweise vollständig, gekrümmten Gurtanlageflächen 8 der Grundkörperklemmkörper 4, 5 und 17. In Summe werden hierdurch sehr hohe Haltekräfte erreicht, ohne dass es noch notwendig ist, die Gurtanlageflächen 8 aufgeraut, also mit Rippen oder Wellen oder dergleichen, auszubilden. Hierdurch wird der Gurt 3 langfristig geschont und seine Lebensdauer erhöht, ohne dass dies zu Einbußen in den erreichbaren Haltekräften führt. Der schwenkbare Grundkörperklemmkörper 4 ist in diesem Ausführungsbeispiel um einen fixen Achsstift 13 schwenkbar gelagert. Günstigerweise verlaufen der Achsstift 13 sowie die als Steg ausgebildeten Grundkörperklemmkörper 4 und 5 parallel zueinander.

In Fig. 3 und Fig. 4 ist an diesen Grundkörper 1 bzw. diese Klemmvorrichtung gemäß der Fig. 1 und 2 ein Spannhebel 2 zum Spannen, also zur Erhöhung der Spannkräfte am Gurt 3 angesetzt. Hierzu ist in dem hier gezeigten Ausführungsbeispiel ein einfaches, in Form einer einseitig offenen Ausnehmung ausgebildetes Schwenkachslager 27 am Grundkörper 1 ausgeführt, in das die Schwenkachse 24 des Spannhebels 2 einfach eingesteckt werden kann. Es handelt es sich also um einen lösbar am Grundkörper 1 befestigbaren Spannhebel 2, dessen Schwenkachse 24 einfach nur in das Schwenkachslager 27 eingesteckt werden muss.

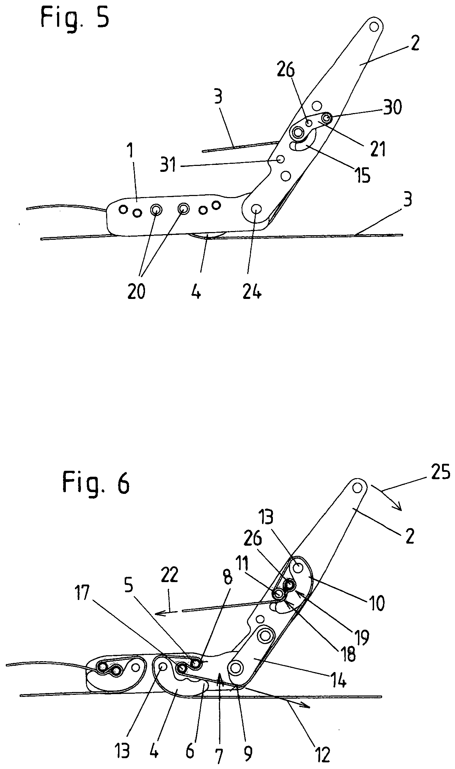

Wie besonders gut im Längsschnitt gemäß Fig. 4 zu sehen ist, weist der Spannhebel 2 dieses Ausführungsbeispiels eine Umlenkkulisse 14 auf, welche eine exzentrisch bezüglich der Schwenkachse 24 angeordnete Gurtanlagefläche 9 für den Gurt 3 aufweist. Diese Art der Exzentrizität kann natürlich auch bei anderen Ausführungsbeispielen realisiert werden. Eine Öffnungsnase 6 des schwenkbar angeordneten Grundkörperklemmkörpers 4 ist in der Klemmstellung gemäß Fig. 4 der Grundkörperklemmkörper 4, 5 und 17 zur Umlenkung des Gurtes 3 um die Öffnungsnase 6 in einem Zwischenraum 7 zwischen einer Gurtanlagefläche 8 des Grundkörperklemmkörpers 5 und einer Gurtanlagefläche 9 einer Spannhebelklemmvorrichtung des Spannhebels 2 angeordnet. Hierdurch wird beim Spannvorgang, also beim Verschwenken des Spannhebels 2 in Spannrichtung 16 eine Öffnung, also ein Wegschwenken des Grundkörperklemmkörpers 4 von den anderen beiden Grundkörperklemmkörpern 5 und 17 erreicht, wodurch der Gurt 3 gespannt werden kann, ohne zwischen den Grundkörperklemmkörpern 4, 5 und 17 und der Spannhebelklemmvorrichtung unnötig gedehnt zu werden. Die Spannhebelklemmvorrichtung ist mit den Spannhebelklemmkörpern 10, 11 und 26 in diesem Ausführungsbeispiel in ihrem grundsätzlichen Aufbau und Zusammenwirken wie die Grundkörperklemmkörper 4, 5 und 17 aufgebaut. In Fig. 3 und dem zugeordneten Längsschnitt gemäß Fig. 4 befindet sich der Spannhebel 2 in einer Ausgangsstellung vor einem Spannhub. In Fig. 6, welche einen Längsschnitt durch die Situation gemäß Fig. 5 zeigt, ist eine Situation während des Spannhubes des Spannhebels 2 in Spannrichtung 16 gezeigt, bei der die Öffnungsnase 6 des schwenkbaren Grundkörperklemmkörpers 4 vom Gurt 3 bereits aus dem Zwischenraum 7 herausgedrückt und dadurch der schwenkbare Grundkörperklemmkörper 4 in eine Freigabestellung geschwenkt wurde, in der der Gurt 3 zwischen den Grundkörperklemmkörpern 4, 5 und 17 hindurchgezogen werden kann.

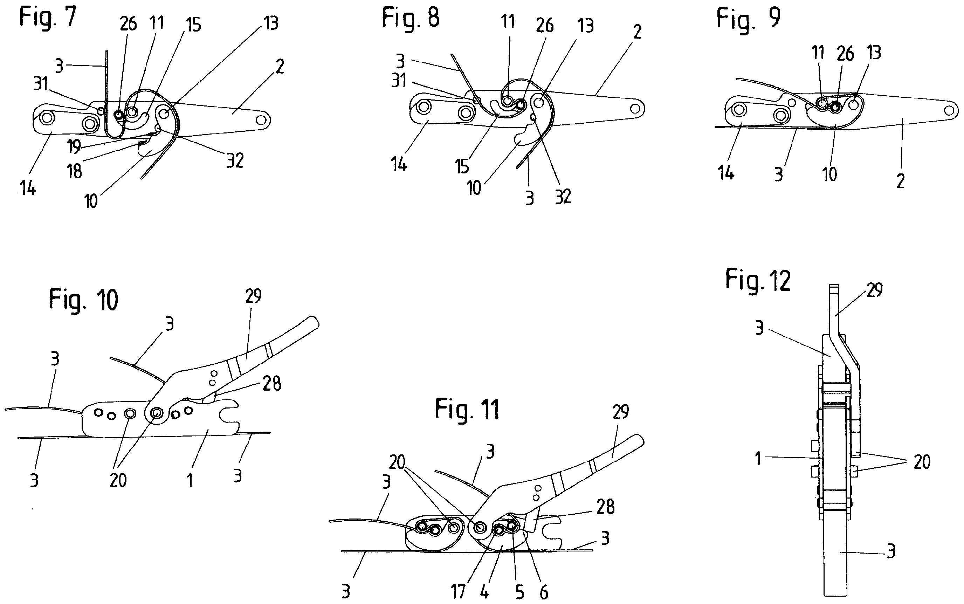

Im Folgenden wird der Spannvorgang anhand eines Vergleichs der Fig. 4 und 6 geschildert. Ausgegangen wird dabei vom Zustand gemäß Fig. 4. In diesem befinden sich die Grundkörperklemmkörper 4, 5 und 17 in ihrer Klemmstellung, in der sie, wie eingangs geschildert, den Gurt 3 festklemmen. Die Öffnungsnase 6, um welche der Gurt 3 herumgeführt bzw. umgelenkt ist, befindet sich in einem Zwischenraum 7 zwischen der Gurtanlagefläche 8 des Grundkörperklemmkörpers 5 und einer Gurtanlagefläche 9 der Spannhebelklemmvorrichtung, hier der Umlenkkulisse 14. In der in Fig. 4 dargestellten Ausgangsstellung zu Beginn eines Spann- bzw. Schwenkvorgangs in Spannrichtung 16 ist die Spannhebelklemmvorrichtung bereits geschlossen, der Gurt 3 ist somit bereits zwischen den Spannhebelklemmkörpern 10, 11 und 26 eingeklemmt. Wird nun ausgehend von Fig. 4 zur Einleitung eines Spannhubes bzw. Spannvorgangs der Spannhebel 2 in Spannrichtung 16 um seine Schwenkachse 24 geschwenkt, so wird der Gurt 3 in der in Fig. 10 eingezeichneten Richtung 12 gezogen. Dies hat zur Folge, dass die Öffnungsnase 6 von dem um sie herumgeführten Gurt 3 aus dem Zwischenraum 7 herausgedrückt wird, wodurch der Grundkörperklemmkörper 4 in eine Freigabestellung geschwenkt wird, in der der Gurt 3 von den Grundkörperklemmkörpern 4, 5 und 17 freigegeben, also nicht mehr festgeklemmt ist. Diese Situation ist beispielhaft in Fig. 6 dargestellt. Hierdurch wird erreicht, dass die Grundkörperklemmkörper 4, 5 und 17 beim Spannhub rasch öffnen und somit ein großer Teil des Schwenkweges in Spannrichtung 16 tatsächlich zum Nachspannen bzw. Nachziehen des Gurtes 3 in Richtung 12 verwendet wird und nicht durch Dehnen des Gurtes 3 verloren geht. Hierdurch wird pro Spannhub also immer ein relativ großes Stück des Gurtes 3 transportiert, womit pro Spannhub eine relativ große Erhöhung der Spannung des Gurtes 3 erzielt werden kann. Dieser Effekt des raschen Öffnens mittels der Öffnungsnase 6 wird, in diesem wie auch anderen bevorzugten Ausführungsbeispielen, durch die Exzentrizität der Umlenkkulisse 14 bzw. deren Gurtanlagefläche 9 bezüglich der Schwenkachse 24 noch verstärkt. In diesem Sinne ist es günstig, wie hier auch realisiert, dass der Gurt 3 durch die Exzentrizität der Umlenkkulisse 14 bzw. deren Gurtanlagefläche 9 am Beginn des Spannhubes des Spannhebels 2, wenn sich die Grundkörperklemmkörper 4, 5 und 17 in ihrer Klemmstellung befinden, stärker um die Öffnungsnase 6 umgelenkt wird, als wenn der Gurt 3 direkt auf der Schwenkachse 24 verlaufen würde. Die gewählte Exzentrizität der Gurtanlagefläche 9 der Umlenkkulisse 14 hat weiters den Vorteil, dass die Grundkörperklemmkörper 4, 5 und 17 am Ende des Spannhubes des Spannhebels 2 schneller wieder in ihre Klemmstellung zurück finden. Hierdurch wird verhindert, dass beim Zurückschwenken des Spannhebels 2 in Gegenrichtung 25 Spannweg verloren geht. Außerdem reduziert die Exzentrizität der Gurtanlagefläche 9 der Umlenkkulisse 14 die während des Spannhubes benötigte Handkraft des Benutzers. Am Ende des Spannhubes kann der Spannhebel 2jedenfalls in Spannrichtung 16 nicht mehr weiter verschwenkt werden. Er wird dann zur Vorbereitung des nächsten Spannhubes in Gegenrichtung 25 in die Stellung gemäß Fig. 4 zurückgeschwenkt. Das Band 3 kann dabei in Richtung 22 soweit notwendig von Hand zwischen den geöffneten Spannhebelklemmkörpern 10, 11 und 26 nachgezogen werden, während die Grundkörperklemmkörper 4, 5 und 17 in ihrer Klemmstellung gemäß Fig. 4 den Gurt 3 in der gespannten Stellung halten. Der geschilderte Spannvorgang kann so oft wiederholt werden, wie es für das Spannen des Gurtes 3 notwendig ist, sodass eine Art Endlosspannvorrichtung geschaffen ist, bei der der maximal mögliche Spannweg des Gurtes 3 nicht durch die Spannhebelklemmvorrichtung beschränkt ist.

Die Spannhebelklemmvorrichtung ist mit ihren Spannhebelklemmkörpern 10, 11 und 26, wie bereits erläutert in wesentlichen Grundzügen analog zu den Grundkörperklemmkörpern 4, 5 und 17 ausgebildet. Die Funktionsweise dieser Spannhebelklemmvorrichtung entspricht dem Zusammenwirken der Grundkörperklemmkörper 4, 5 und 17 ebenso wie der jeweilige Aufbau. Auch hier drückt der schwenkbar am Spannhebel 2 gelagerte Spannhebelklemmkörper 10 in der Klemmstellung den Gurt 3 gegen die beiden anderen Spannhebelklemmkörper 11 und 26. Auch hier liegt der Gurt 3 direkt an sich selbst an, wodurch in Summe besonders hohe Klemmkräfte in der Klemmstellung erreicht werden. In diesem Sinne kann also auch der Spannhebel 2 dieses Ausführungsbeispiels als eine Klemmvorrichtung zum Festklemmen eines Gurtes 3 gemäß der Erfindung angesehen werden, wobei die Klemmvorrichtung einen Grundkörper in Form der entsprechenden Abschnitte des Spannhebels 2 aufweist, an dem zumindest zwei als Steg zum Herumwickeln des Gurtes 3 ausgebildete Grundkörperklemmkörper, hier in Form der Spannhebelklemmkörper 11 und 26 angeordnet sind, wobei am Grundkörper in Form des Spannhebels 2 zumindest ein dritter, als relativ zum Spannhebel 2 schwenkbarer Hebel ausgebildeter Grundkörperklemmkörper in Form des Spannhebelklemmkörpers 10 angeordnet ist, wobei dieser dritte Grundkörperklemmkörper in Form des Spannhebelklemmkörpers 10 in eine Klemmstellung zum Einklemmen des Gurtes 3 zwischen den als Steg ausgebildeten Spannhebelklemmkörpern 11 und 26 und dem dritten Spannhebelklemmkörper 10 schwenkbar ist.

Um das Einfädeln des Gurtes zwischen den drei Grundkörperklemmkörpern 4, 5 und 17 bzw. den Spannhebelklemmkörpern 10, 11 und 26 zu erleichtern, kann zumindest einer der als Steg ausgebildeten Grundkörperklemmkörper bzw. Spannhebelklemmkörper 26 in seiner Position relativ zum Grundkörper 1 bzw. Spannhebel 2 verstellbar am Grundkörper gelagert sein. Im hier gezeigten Ausführungsbeispiel ist dies beispielhaft am Spannhebel 2 bzw. an der Spannhebelklemmvorrichtung realisiert, indem der als Steg ausgebildete Spannhebelklemmkörper 26 mittels des Schwenkhebels 21 im Langloch 15 verschwenkt werden kann. Fig. 7 zeigt dabei die Stellung des Spannhebelklemmkörpers 26, in der der Gurt 3 besonders einfach zwischen den Spannhebelklemmkörpern 10, 11 und 26 hindurchgefädelt werden kann. In Fig. 8 ist der verstellbare Spannhebelklemmkörper 26 wieder in seine Betriebsstellung zurückgeschwenkt, in der er zwischen dem fixen stegartig ausgebildeten Spannhebelklemmkörper 11 und dem Achsstift 13 des schwenkbaren Spannhebelklemmkörpers 10 angeordnet ist. Der als Steg ausgebildete, verstellbare Spannhebelklemmkörper 26 ist in zumindest einer Position arretierbar ist. Im gezeigten Ausführungsbeispiel ist er in seinen zwei Endlagen arretierbar. Es handelt sich dabei einerseits um die Position, in der er zum Festklemmen des Gurtes 3 angeordnet ist. Zusätzlich kann dieser verstellbare Spannhebelklemmkörper 26 z.B. aber auch in seiner Position, in der er zum Einfädeln des Gurtes 3 angeordnet ist, arretiert werden. Im gezeigten Ausführungsbeispiel wird dies durch einen mittels einer Feder vorgespannten Raststift erreicht. Dieser befindet sich am Griffteil 30 des Schwenkhebels 21 und rastet in den genannten Endlagen in die Löcher 31 und 32 ein, um die gewünschte Arretierung des Spannhebelklemmkörpers 26 entsprechend zu erreichen. Zum Lösen dieser Arretierung wird am Griffteil 30 so gezogen, dass der hier nicht sichtbare Raststift aus dem jeweiligen Loch 31 bzw. 32 herausgezogen und damit die Arretierung aufgehoben wird.

Fig. 9 zeigt die Klemmstellung, in der der schwenkbare Spannhebelklemmkörper den Gurt 3 gegen die beiden stegartig ausgebildeten Spannhebelklemmkörper 11 und 26 drückt. Auch wenn dies hier nicht explizit gezeigt ist, so ist dennoch klar, dass auch der Grundkörperklemmkörper 17 in analoger Weise wie der Spannhebelklemmkörper 26 schwenkbar gelagert sein kann, um das Einfädeln des Gurtes 3 zu erleichtern.

Die Fig. 10, 11 und 12 zeigen einen Lösehebel 29 für dieses Ausführungsbeispiel. Dieser wird seitlich auf einen der Zapfen 20 des Grundkörpers 1 aufgesteckt. Er weist einen Lösesteg 28 auf, mit dem er zum Öffnen auf die Öffnungsnase 6 des schwenkbaren Grundkörperklemmkörpers 4 einwirkt. In der Draufsicht gemäß Fig. 12 ist besonders gut die einseitige Befestigung des Lösehebels 29 dieses Ausführungsbeispiels zu sehen.

Abschließend ist noch darauf hinzuweisen, dass auch wenn das hier im Detail geschilderte Ausführungsbeispiel sich auf die Verwendung mit einem Gurt 3 bezieht, erfindungsgemäße Klemmvorrichtungen dennoch durchaus auch zum entsprechenden Spannen bzw. Festklemmen von Seilen geeignet sind.

**Legende zu den Hinweisziffern:**

| | | | |
|---|---|---|---|
| 1 | Grundkörper | 17 | Grundkörperklemmkörper |
| 2 | Spannhebel | 18 | Ausnehmung |
| 3 | Gurt | 19 | Ausnehmung |
| 4 | Grundkörperklemmkörper | 20 | Zapfen |
| 5 | Grundkörperklemmkörper | 21 | Schwenkhebel |
| 6 | Öffnungsnase | 22 | Richtung |
| 7 | Zwischenraum | 23 | Richtung |
| 8 | Gurtanlagefläche | 24 | Schwenkachse |
| 9 | Gurtanlagefläche | 25 | Gegenrichtung |
| 10 | Spannhebelklemmkörper | 26 | Spannhebelklemmkörper |
| 11 | Spannhebelklemmkörper | 27 | Schwenkachslager |
| 12 | Richtung | 28 | Lösesteg |
| 13 | Achsstift | 29 | Lösehebel |
| 14 | Umlenkkulisse | 30 | Griffteil |
| 15 | Langloch | 31 | Loch |
| 16 | Spannrichtung | 32 | Loch |

## Patentansprüche

1. Klemmvorrichtung zum Festklemmen zumindest eines Gurtes (3), wobei die Klemmvorrichtung einen Grundkörper (1) aufweist, an dem zumindest zwei als Steg zum Herumwickeln des Gurtes (3) ausgebildete Grundkörperklemmkörper (5, 17) angeordnet sind, **dadurch gekennzeichnet, dass** am Grundkörper (1) zumindest ein dritter, als relativ zum Grundkörper (1) schwenkbarer Hebel ausgebildeter Grundkörperklemmkörper (4) angeordnet ist, wobei der dritte Grundkörperklemmkörper (4) in eine Klemmstellung zum Einklemmen des Gurtes (3) zwischen den als Steg ausgebildeten Grundkörperklemmkörpern (5, 17) und dem dritten Grundkörperklemmkörper (4) schwenkbar ist.

2. Klemmvorrichtung nach Anspruch 1, **dadurch gekennzeichnet, dass** der dritte Grundkörperklemmkörper (4) um einen, vorzugsweise in seiner Position am Grundkörper (1) fix angeordneten, Achsstift (13) schwenkbar ist.

3. Klemmvorrichtung nach Anspruch 1 oder 2, **dadurch gekennzeichnet, dass** der dritte Grundkörperklemmkörper (4) Ausnehmungen (18, 19) zur zumindest teilweisen Aufnahme des Gurtes (3) und jeweils eines des als Steg ausgebildeten Grundkörperklemmkörpers (5, 17) aufweist.

4. Klemmvorrichtung nach einem der Ansprüche 1 bis 3, **dadurch gekennzeichnet, dass** zumindest einer der, vorzugsweise alle, Grundkörperklemmkörper (4, 5, 17) eine zumindest bereichsweise, vorzugsweise vollständig, gekrümmte Gurtanlagefläche (8) zur Anlage des Gurtes (1) am jeweiligen Grundkörperklemmkörper (4, 5, 17) aufweist.

5. Klemmvorrichtung nach einem der Ansprüche 1 bis 4, **dadurch gekennzeichnet, dass** zumindest einer der, vorzugsweise alle, als Steg ausgebildeten Grundkörperklemmkörper (5, 17) in seiner bzw. ihrer Position am Grundkörper (1) fixiert sind.

6. Klemmvorrichtung nach einem der Ansprüche 1 bis 5, **dadurch gekennzeichnet, dass** zumindest einer der als Steg ausgebildeten Grundkörperklemmkörper in seiner Position relativ zum Grundkörper (1) verstellbar, vorzugsweise verschwenkbar, am Grundkörper (1) gelagert ist.

7. Klemmvorrichtung nach Anspruch 6, **dadurch gekennzeichnet, dass** der als Steg ausgebildete und in seiner Position relativ zum Grundkörper (1) verstellbar, vorzugsweise verschwenkbar, am Grundkörper (1) gelagerte Grundkörperklemmkörper in der Klemmstellung zwischen dem anderen, als Steg ausgebildeten Grundkörperklemmkörper (5, 11) und einem bzw. dem Achsstift (13), um den der dritte Grundkörperklemmkörper (4, 10) schwenkbar ist, angeordnet ist.

8. Klemmvorrichtung nach einem der Ansprüche 1 bis 7, **dadurch gekennzeichnet, dass** der schwenkbare Grundkörperklemmkörper (4) in einem Querschnitt gesehen c-förmig und/oder halbmondförmig ausgebildet ist.

9. Verfahren zum Festklemmen zumindest eines Gurtes (1) und/oder zumindest eines Seiles mittels einer Klemmvorrichtung nach einem der Ansprüche 1 bis 8, **dadurch gekennzeichnet, dass** der Gurt (1) oder das Seil um die als Steg ausgebildeten Grundkörperklemmkörper (5, 17) herumgewickelt und in der Klemmstellung mittels des dritten Grundkörperklemmkörpers (4) gegen die als Steg ausgebildeten Grundkörperklemmkörper (5, 17) gedrückt wird.

10. Verfahren nach Anspruch 9, **dadurch gekennzeichnet, dass** der Gurt (1) zwischen mindestens einem der als Steg ausgebildeten Grundkörperklemmkörper (5, 17) und dem dritten Grundkörperklemmkörper (4) doppelt und an sich selbst anliegend verläuft.

## Claims

1. A clamping device for the clamping in place of at least one belt (3), wherein the clamping device has a basic body (1) on which there are arranged at least two basic body clamping bodies (5, 17) in the form of an elongated member for the winding around of the belt (3), **characterised in that** at least a third basic body clamping body (4), in the form of a lever pivotable relative to the basic body (1), is arranged on the basic body (1), wherein the third basic body clamping body (4) is pivotable into a clamping position for the clamping of the belt (3) between the basic body clamping bodies (5, 17) in the form of an elongated body and the third basic body clamping body (4).

2. A clamping device according to claim 1, **characterised in that** the third basic body clamping body (4) is pivotable about an axle pin (13) preferably fixedly arranged in its position on the basic body (1).

3. A clamping device according to claim 1 or 2, **characterised in that** the third basic body clamping body (4) has recesses (18, 19) for at least partially receiving the belt (3) and in each case one of the basic body clamping bodies (5, 17) in the form of an elongated member.

4. A clamping device according to any one of claims 1 to 3, **characterised in that** at least one, preferably all, of the basic body clamping bodies (4, 5, 17) has/have an at least regionally, preferably completely, curved belt contact surface (8) for contact of the belt (1) against the respective basic body clamping body (4, 5, 17).

5. A clamping device according to any one of claims 1 to 4, **characterised in that** at least one, preferably all, of the basic body clamping bodies (5, 17) in the form of an elongated member is/are fixed in its or their position on the basic body (1).

6. A clamping device according to any one of claims 1 to 5, **characterised in that** at least one of the basic body clamping bodies in the form of an elongated member is mounted on the basic body (1) so as to be adjustable, preferably pivotable, in its position relative to the basic body (1).

7. A clamping device according to claim 6, **characterised in that** the basic body clamping body, in the form of an elongated member and mounted on the basic body (1) so as to be adjustable, preferably pivotable, in its position relative to the basic body (1), is in the clamping position arranged between the other basic body clamping body (5, 11), in the form of an elongated member, and a/the axle pin (13) about which the third basic body clamping body (4, 10) is pivotable.

8. A clamping device according to any one of claims 1 to 7, **characterised in that** the pivotable basic body clamping body (4) is c-shaped and/or crescent-shaped when viewed in cross-section.

9. A method of clamping in place at least one belt (1) and/or at least one cable by means of a clamping device according to any one of claims 1 to 8, **characterised in that** the belt (1) or the cable is wound around the basic body clamping bodies (5, 17), which are in the form of an elongated member, and in the clamping position is pressed against the basic body clamping bodies (5, 17), in the form of an elongated member, by means of the third basic body clamping body (4).

10. A method according to claim 9, **characterised in that** between at least one of the basic body clamping bodies (5, 17), in the form of an elongated member, and the third basic body clamping body (4), the belt (1) runs doubled and in contact with itself.

## Revendications

1. Dispositif de serrage pour serrer au moins une courroie (3), le dispositif de serrage comportant un corps de base (1) sur lequel sont disposés au moins deux corps de serrage de corps de base (5, 17) réalisés sous la forme de tiges pour y enrouler la courroie (3), **caractérisé en ce qu'**au moins un troisième corps de serrage de corps de base (4), réalisé sous la forme d'un levier pivotant par rapport au corps de base (1), est disposé sur le corps de base (1), lequel troisième corps de serrage de corps de base (4) peut pivoter dans une position de serrage pour serrer la courroie (3) entre les corps de serrage de corps de base (5, 17), réalisés sous forme la forme de tiges, et le troisième corps de serrage de corps de base (4).

2. Dispositif de serrage selon la revendication 1, **caractérisé en ce que** le troisième corps de serrage de corps de base (4) peut pivoter autour d'une cheville d'axe (13) dont la position est de préférence fixe sur le corps de base (1).

3. Dispositif de serrage selon la revendication 1 ou 2, **caractérisé en ce que** le troisième corps de serrage de corps de base (4) présente des évidements (18, 19) pour recevoir au moins en partie la courroie (3) et chacun un des corps de serrage de corps de base (5, 17) réalisés sous la forme de tiges.

4. Dispositif de serrage selon l'une des revendications 1 à 3, **caractérisé en ce qu'**au moins l'un des corps de serrage de corps de base (4, 5, 17), de préférence tous, est muni d'une surface de contact de courroie (8) réalisée courbée au moins par endroits, de préférence totalement courbée, pour l'appui de la courroie (1) contre le corps de serrage de corps de base (4, 5, 17) correspondant.

5. Dispositif de serrage selon l'une des revendications 1 à 4, **caractérisé en ce qu'**au moins l'un des corps de serrage de corps de base (5, 17) réalisés sous la forme de tiges, de préférence tous, est ou sont fixé(s) dans sa ou leur position sur le corps de base (1).

6. Dispositif de serrage selon l'une des revendications 1 à 5, **caractérisé en ce qu'**au moins l'un des corps de serrage de corps de base réalisés sous la forme de tiges est logé sur le corps de base (1) dans une position réglable, de préférence pivotante, par rapport au corps de base (1).

7. Dispositif de serrage selon la revendication 6, **caractérisé en ce que** le corps de serrage de corps de base qui est réalisé sous la forme de tige et qui est monté sur le corps (1) avec sa position réglable, de préférence pivotante, par rapport au corps de base (1), est disposé, dans la position de serrage, entre l'autre corps de serrage de corps de base (5, 11) réalisé sous la forme de tige et une ou la cheville d'axe (13) autour de laquelle peut pivoter le troisième corps de serrage de corps de base (4, 10).

8. Dispositif de serrage selon l'une des revendications 1 à 7, **caractérisé en ce que** le corps de serrage de corps de base (4) pivotant est, considéré en coupe transversale, en forme de C et/ou de demi-lune.

9. Procédé pour serrer au moins une courroie (1) et/ou au moins un câble au moyen d'un dispositif de serrage selon l'une des revendications 1 à 8, **caractérisé en ce que** la courroie (1) ou le câble est enroulé autour des corps de serrage de corps de base (5, 17) réalisés sous la forme de tiges et est appuyé, en position de serrage, contre les corps de serrage de corps de base (5, 17) réalisés sous la forme de tiges au moyen du troisième corps de serrage de corps de base (4).

10. Procédé selon la revendication 9, **caractérisé en ce que** la courroie (1) passe deux fois et est en appui sur elle-même entre au moins l'un des corps de serrage de corps de base (5, 17) réalisé sous la forme de tige et le troisième corps de serrage de corps de base (4).
